# EUROPEAN PATENT APPLICATION

(11) **EP 4 607 768 A1**
(43) Date of publication of application: **27.08.2025**
(21) Application number: 22962260.0
(22) Date of filing: 19.10.2022
(51) Int. Cl.: H02K 3/26, H02K 3/47

(54) **COIL SUBSTRATE FOR MOTOR, AND MOTOR**

(71) Applicant: IBIDEN CO., LTD., Ogaki-shi, Gifu 503-8604 (JP)
(72) Inventor: HIRASAWA, Takahisa, Ogaki-shi, Gifu 503-8503 (JP); FURUNO, Takayuki, Ogaki-shi, Gifu 503-8503 (JP)
(74) Representative: Hoefer & Partner Patentanwälte mbB
(86) International application number: PCT/JP2022/038930
(87) International publication number: WO 2024/084626

(57) **Abstract**

Provided are: a coil substrate for motors with which a motor having stable performance is obtained, and a motor formed by using the coil substrate for motors. This coil substrate for motors according to an embodiment has: a flexible substrate that has a first surface and a second surface on the side opposite to the first surface; and a plurality of coils formed with wires provided on the first surface and the second surface. Using a first end in the longitudinal direction of the flexible substrate as a starting point, a cylindrical shape is formed by winding the flexible substrate in the circumferential direction around a shaft that extends in an orthogonal direction orthogonal to the longitudinal direction. The cylindricity of the outer circumferential surface is greater than 0.0 mm and no more than 0.3 mm.

## Description

### Technical Field

The technology disclosed in the present specification relates to a motor coil board, and a motor formed by using the motor coil board.

### Background Art

Patent Document 1 describes a coil board comprising a flexible board and spiral-shaped coils formed on both surfaces of the flexible board. A motor coil board is formed by winding the coil board into a cylindrical shape. A motor is formed by arranging the formed motor coil board on the inside of a cylindrical yoke, and arranging a rotary shaft and a magnet on the inside of the motor coil board. The flexible board in Patent Document 1 comprises a main portion on which the coils are formed, and a sub-portion extending from the main portion and formed without coils. The thickness of the motor coil board can be made equal from 0° to 360° by adjusting the length of the sub-portion. In the technology of Patent Document 1, it would be feasible to obtain a high-performance motor by winding the motor coil board into a perfectly circular cylindrical shape.

### Prior Art Documents

### Patent Documents

Patent Document 1 JP 2022-43581 A

### Summary of the Invention

### [Problems in Patent Document 1]

However, in the technology of Patent Document 1, the yoke and an outer circumferential surface of the perfectly circular cylindrical motor coil board are considered to have low bonding strength. It is feasible that the motor coil board will readily detach from the yoke due to a counteraction resulting from rotation of the rotary shaft and the magnet. It is feasible that stable motor performance will not be achieved as a result. In addition, it is feasible that stable motor performance will not be achieved in the case of small motors.

### Means for Solving the Problems

A motor coil board according to the present invention comprises: a flexible board having a first face and a second face on the opposite side to the first face; and a plurality of coils formed by wiring provided on the first face and the second face, the motor coil board being formed into a cylindrical shape by being wound in a circumferential direction about an axis extending in an orthogonal direction orthogonal to a longitudinal direction of the flexible board, starting from a first end of the flexible board in the longitudinal direction. Cylindricity of an outer circumferential surface is greater than 0.0 mm and no greater than 0.3 mm.

The cylindricity of the outer circumferential surface of the motor coil board according to an embodiment of the present invention is greater than 0.0 mm and no greater than 0.3 mm. When a motor is formed by using the motor coil board, the bonding strength between a yoke and the outer circumferential surface of the motor coil board is therefore higher than when the cylindricity of the outer circumferential surface is 0.0 mm. The motor coil board is unlikely to detach from the yoke even when a counteraction is exerted by rotation of a rotary shaft and a magnet. When a small motor employing the motor coil board according to an embodiment of the present invention is produced in particular, the bonding strength is higher because a wider contact area is maintained between the yoke and the outer circumferential surface of the motor coil board. Stable motor performance is therefore achieved when a motor is formed by using the motor coil board according to an embodiment. The motor coil board is also unlikely to detach from the yoke when a small motor is formed by using the motor coil board according to an embodiment. Stable motor performance is therefore achieved.

A motor according to the present invention is formed by arranging the motor coil board according to the present invention on the inside of a cylindrical yoke, and arranging a rotary shaft and a magnet on the inside of the motor coil board.

The yoke and the outer circumferential surface of the motor coil board have high bonding strength in the motor according to an embodiment of the present invention. The motor coil board is unlikely to detach from the yoke even when a counteraction is exerted by rotation of the rotary shaft and the magnet. When a small motor is produced in particular, the bonding strength is higher because a wider contact area is maintained between the yoke and the outer circumferential surface of the motor coil board. Stable motor performance is therefore achieved. Stable motor performance is also achieved when a small motor is formed.

### Brief Description of the Drawings

[Fig. 1] is a plan view schematically showing a coil board according to an embodiment.
[Fig. 2] is a view in cross section schematically showing the coil board according to the embodiment.
[Fig. 3A] is a plan view schematically showing a U phase coil of the coil board according to the embodiment.
[Fig. 3B] is a plan view schematically showing a V phase coil of the coil board according to the embodiment.
[Fig. 3C] is a plan view schematically showing a W phase coil of the coil board according to the embodiment.
[Fig. 4] is a plan view contrasting the U phase, V phase and W phase of the coil board according to the embodiment.
[Fig. 5] is an illustrative diagram showing a simplified form of the coil board according to the embodiment.
[Fig. 6] is an oblique view schematically showing a motor coil board according to the embodiment.
[Fig. 7] is an illustrative diagram schematically showing positions of terminals of the motor coil board according to the embodiment.
[Fig. 8] is a partial enlargement of fig. 7.
[Fig. 9] is a view in cross section schematically showing a motor according to the embodiment.
[Fig. 10] is a plan view schematically showing a coil board according to a modified example.
[Fig. 11] is a bottom view schematically showing the coil board according to the modified example.

### Embodiment of the Invention

### [Embodiment]

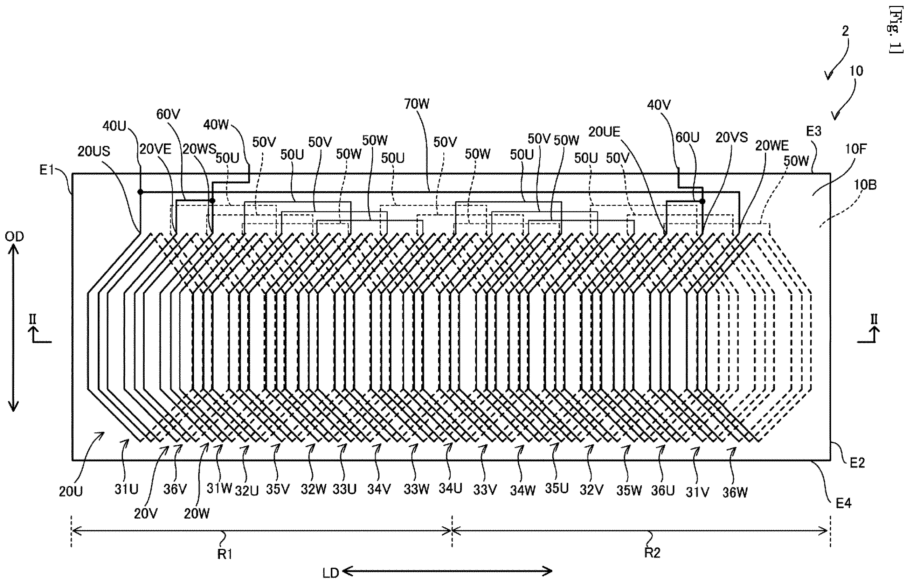

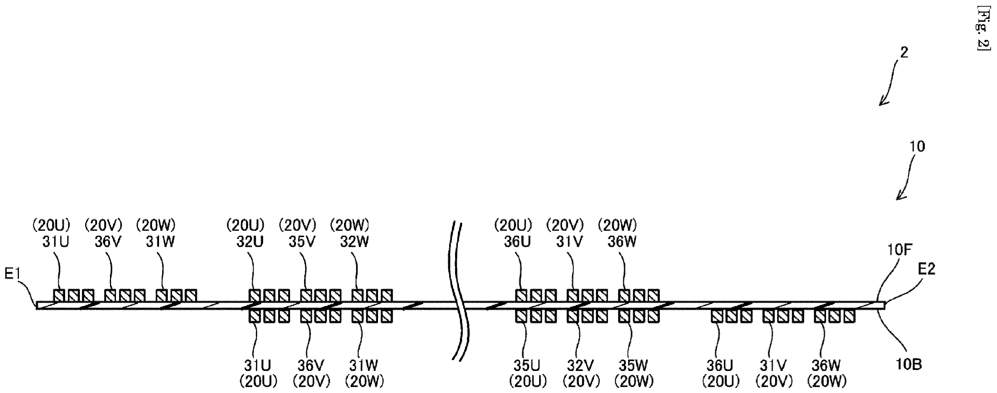

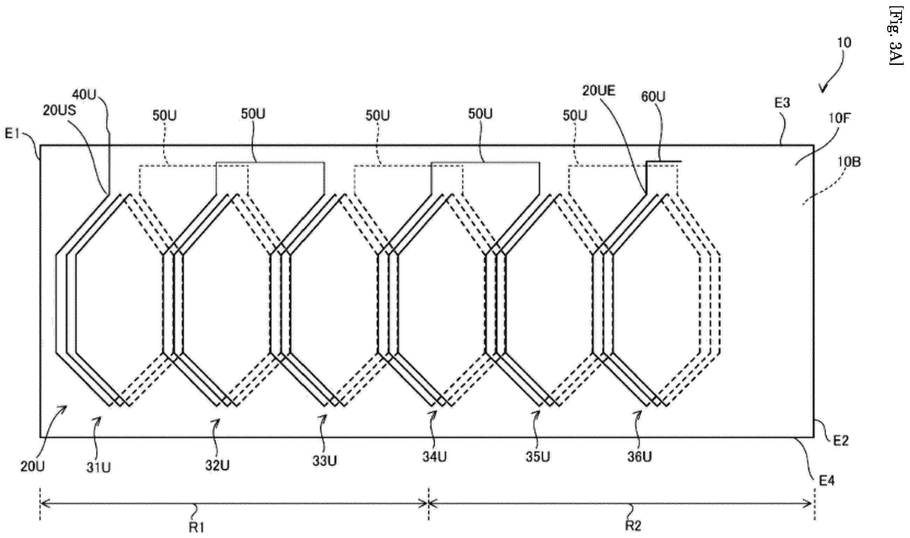

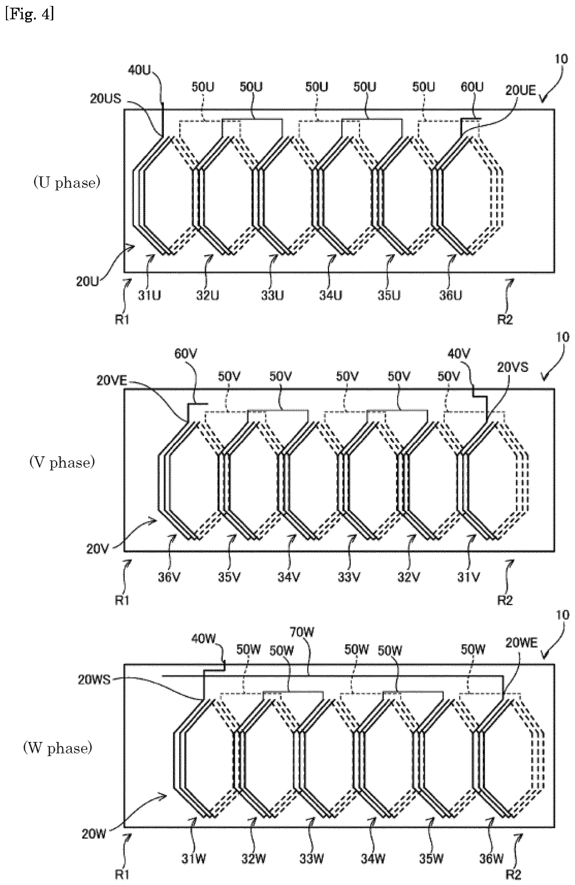

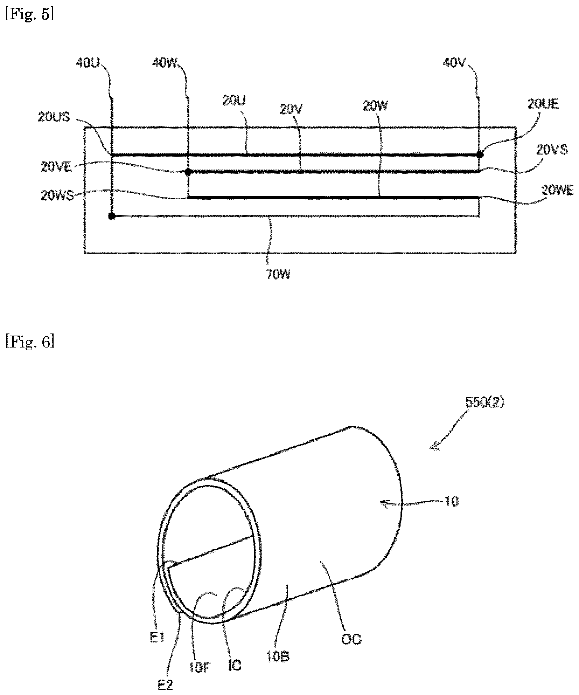

Fig. 1 is a plan view showing a coil board 2 according to an embodiment. Fig. 2 is a view in the cross section II-II in fig. 1. Fig. 3A-3C are plan views respectively showing a U phase coil 20U, a V phase coil 20V, and a W phase coil 20W. Fig. 4 is a plan view contrasting the U phase, V phase and W phase of the coil board 2. Fig. 5 is a plan view showing a simplified form of the coil board 2 in fig. 1.

As shown in fig. 1, the coil board 2 comprises: a flexible board 10; a U phase coil 20U; a V phase coil 20V; a W phase coil 20W; a U phase terminal 40U; a V phase terminal 40V; a W phase terminal 40W; a plurality of inter-coil connecting wires 50U, 50V, 50W; a plurality of inter-phase connecting wires 60U, 60V, and a return wire 70W.

The flexible board 10 is a resin board comprising a first face 10F and a second face 10B on the opposite side to the first face 10F. The flexible board 10 is formed by using an insulating resin such as polyimide or polyamide. The flexible board 10 is capable of flexing. The flexible board 10 is formed in a rectangular shape with four edges, which are a first edge E1 to a fourth edge E4. The first edge E1 is a short edge on one end side of the flexible board 10 in a longitudinal direction (direction of the arrow LD in fig. 1). The second edge E2 is a short edge on the other end side in the longitudinal direction. The first edge E1 and the second edge E2 are both short edges extending along an orthogonal direction (direction of the arrow OD in fig. 1) which is orthogonal to the longitudinal direction. The third edge E3 and the fourth edge E4 are both long edges extending along the longitudinal direction. As will be described in detail later, when the coil board 2 is wound into a cylindrical shape to form the motor coil board 550 (see fig. 6), the first face 10F is arranged on an inner circumferential side and the second face 10B is arranged on an outer circumferential side.

The flexible board 10 has a first region R1 on one end side (first edge E1 side) in the longitudinal direction, and a second region R2 next to the first region R1. The second region R2 includes a second edge E2.

The U phase terminal 40U, V phase terminal 40V, and W phase terminal 40W are all formed on a third edge E3 of the flexible board 10. In this embodiment, the U phase terminal 40U and the W phase terminal 40W are arranged within the first region R1. The V phase terminal 40V is arranged within the second region R2. As shown in fig. 1, the U phase terminal 40U is connected to a starting end 20US of the U phase coil 20U. At the same time, the U phase terminal 40U is connected to a terminal end 20WE of the W phase coil 20W by way of the return wire 70W. The V phase terminal 40V is connected to a starting end 20VS of the V phase coil 20V. At the same time, the V phase terminal 40V is connected to a terminal end 20UE of the U phase coil 20U by way of the inter-phase connecting wire 60U. The W phase terminal 40W is connected to a starting end 20WS of the W phase coil 20W. At the same time, the W phase terminal 40W is connected to a terminal end 20VE of the V phase coil 20V by way of the inter-phase connecting wire 60V. That is to say, in this embodiment, the U phase coil 20U, the V phase coil 20V, and the W phase coil 20W are Δ-connected (see fig. 5). It should be noted that, in another example, the U phase coil 20U, the V phase coil 20V, and the W phase coil 20W may equally be Y-connected, or connected in another way.

The U phase coil 20U, the V phase coil 20V, and the W phase coil 20W respectively constitute the U phase, V phase and W phase of a three-phase motor.

As shown in fig. 1, 3A and 4, the starting end 20US of the U phase coil 20U is arranged within the first region R1. The terminal end 20UE of the U phase coil 20U is arranged within the second region R2. As shown in fig. 3A, the U phase coil 20U includes six coils 31U, 32U, 33U, 34U, 35U and 36U. The six coils 31U-36U are aligned in that order from the starting end 20US toward the terminal end 20UE of the U phase coil 20U (from the first region R1 toward the second region R2). The six coils 31U-36U are connected to each other by means of the inter-coil connecting wires 50U.

In order to form the six coils 31U-36U, first wiring constituting a half turn of one turn is formed on the first face 10F side, second wiring constituting a remaining half turn is formed on the second face 10B side, and adjacent turns are arranged offset from each other. The first wiring and the second wiring are electrically connected through a via conductor penetrating the flexible board 10.

Winding start positions (starting ends) of the first coil 31U, the third coil 33U, and the fifth coil 35U from the starting end 20US of the U phase coil 20U are arranged on the first face 10F, and winding end positions (terminal ends) thereof are arranged on the second face 10B. The coils 31U, 33U, 35U are wound counterclockwise when the flexible board 10 is seen from the first face 10F side.

Meanwhile, winding start positions (starting ends) of the second coil 32U, the fourth coil 34U, and the sixth coil 36U from the starting end 20US of the U phase coil 20U are arranged on the second face 10B, and winding end positions (terminal ends) thereof are arranged on the first face 10F. The coils 32U, 34U, 36U are wound clockwise when the flexible board 10 is seen from the first face 10F side.

As shown in fig. 2, 3A and 1, a portion of the wiring (second wiring) of the coil 31U overlaps a portion of the wiring (first wiring) of the adjacent coil 32U through the flexible board 10. In the same way, a portion of the wiring (second wiring) of the coil 32U overlaps a portion of the wiring (first wiring) of the adjacent coil 33U. A portion of the wiring (second wiring) of the coil 33U overlaps a portion of the wiring (first wiring) of the adjacent coil 34U. A portion of the wiring (second wiring) of the coil 34U overlaps a portion of the wiring (first wiring) of the adjacent coil 35U. A portion of the wiring (second wiring) of the coil 35U overlaps a portion of the wiring (first wiring) of the adjacent coil 36U.

As shown in fig. 3A and 1, the inter-coil connecting wire 50U connecting the coil 31U and the coil 32U, the inter-coil connecting wire 50U connecting the coil 33U and the coil 34U, and the inter-coil connecting wire 50U connecting the coil 35U and the coil 36U are arranged on the second face 10B. Meanwhile, the inter-coil connecting wire 50U connecting the coil 32U and the coil 33U, and the inter-coil connecting wire 50U connecting the coil 34U and the coil 35U are arranged on the first face 10F. The U phase terminal 40U and the inter-phase connecting wire 60U are arranged on the first face 10F.

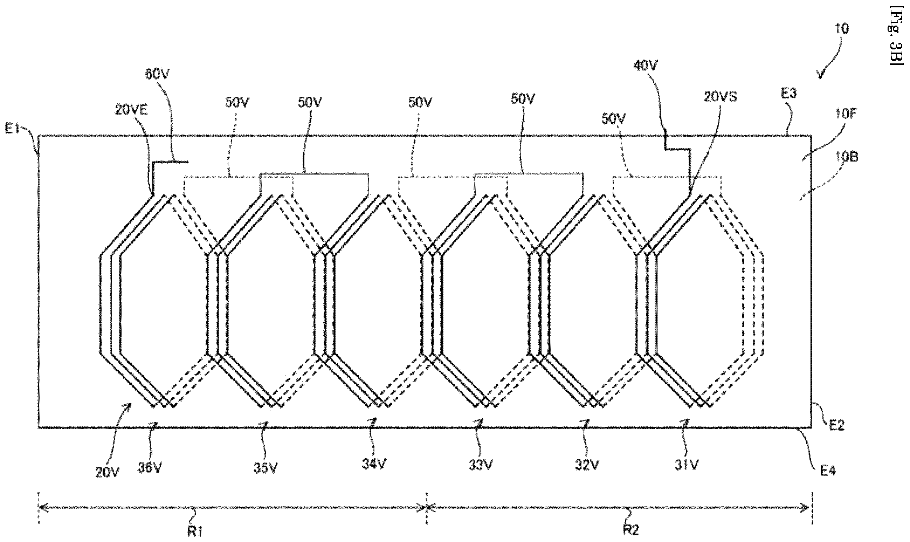

As shown in fig. 1, 3B and 4, the starting end 20VS of the V phase coil 20V is arranged within the second region R2. The terminal end 20VE of the V phase coil 20V is arranged within the first region R1. As shown in fig. 3B, the V phase coil 20V includes six coils 31V, 32V, 33V, 34V, 35V and 36V. The six coils 31V-36V are aligned in that order from the starting end 20VS toward the terminal end 20VE of the V phase coil 20V (from the second region R2 toward the first region R1). The six coils 31V-36V are connected to each other by means of the inter-coil connecting wires 50V.

In order to form the six coils 31V-36V, first wiring constituting a half turn of one turn is formed on the first face 10F side, second wiring constituting a remaining half turn is formed on the second face 10B side, and adjacent turns are arranged offset from each other. The first wiring and the second wiring are electrically connected through a via conductor penetrating the flexible board 10.

Winding start positions (starting ends) of the first coil 31V, the third coil 33V, and the fifth coil 35V from the starting end 20VS of the V phase coil 20V are arranged on the first face 10F, and winding end positions (terminal ends) thereof are arranged on the second face 10B. The coils 31V, 33V, 35V are wound counterclockwise when the flexible board 10 is seen from the first face 10F side.

Meanwhile, winding start positions (starting ends) of the second coil 32V, the fourth coil 34V, and the sixth coil 36V from the starting end 20VS of the V phase coil 20V are arranged on the second face 10B, and winding end positions (terminal ends) thereof are arranged on the first face 10F. The coils 32V, 34V, 36V are wound clockwise when the flexible board 10 is seen from the first face 10F side.

As shown in fig. 2, 3B and 1, a portion of the wiring (first wiring) of the coil 31V overlaps a portion of the wiring (second wiring) of the adjacent coil 32V through the flexible board 10. In the same way, a portion of the wiring (first wiring) of the coil 32V overlaps a portion of the wiring (second wiring) of the adjacent coil 33V. A portion of the wiring (first wiring) of the coil 33V overlaps a portion of the wiring (second wiring) of the adjacent coil 34V. A portion of the wiring (first wiring) of the coil 34V overlaps a portion of the wiring (second wiring) of the adjacent coil 35V. A portion of the wiring (first wiring) of the coil 35V overlaps a portion of the wiring (second wiring) of the adjacent coil 36V.

As shown in fig. 3B and 1, the inter-coil connecting wire 50V connecting the coil 31V and the coil 32V, the inter-coil connecting wire 50V connecting the coil 33V and the coil 34V, and the inter-coil connecting wire 50V connecting the coil 35V and the coil 36V are arranged on the second face 10B. Meanwhile, the inter-coil connecting wire 50V connecting the coil 32V and the coil 33V, and the inter-coil connecting wire 50V connecting the coil 34V and the coil 35V are arranged on the first face 10F. The V phase terminal 40V and the inter-phase connecting wire 60V are arranged on the first face 10F.

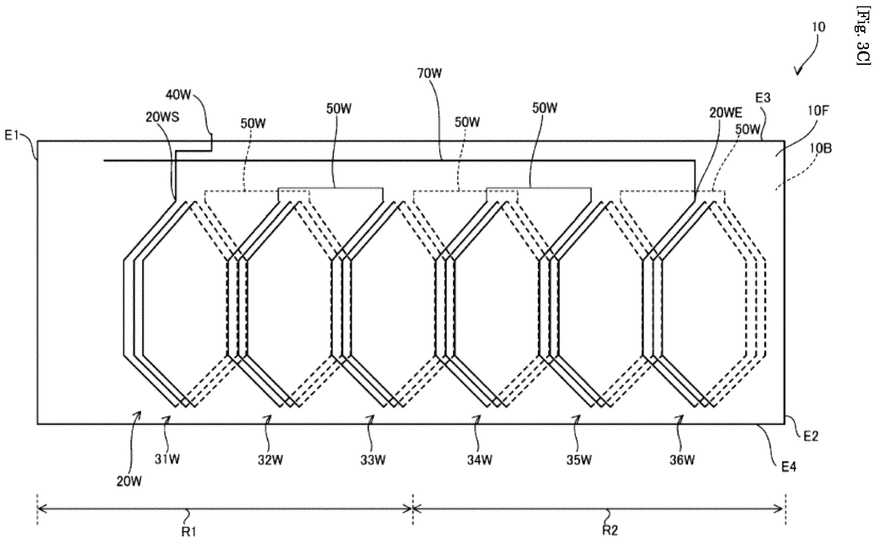

As shown in fig. 1, 3C and 4, the starting end 20WS of the W phase coil 20W is arranged within the first region R1. The terminal end 20WE of the W phase coil 20W is arranged within the second region R2. As shown in fig. 3C, the W phase coil 20W includes six coils 31W, 32W, 33W, 34W, 35W and 36W. The six coils 31W-36W are aligned in that order from the starting end 20WS toward the terminal end 20WE of the W phase coil 20W (from the first region R1 toward the second region R2). The six coils 31W-36W are connected to each other by means of the inter-coil connecting wires 50W.

In order to form the six coils 31W-36W, first wiring constituting a half turn of one turn is formed on the first face 10F side, second wiring constituting a remaining half turn is formed on the second face 10B side, and adjacent turns are arranged offset from each other. The first wiring and the second wiring are electrically connected through a via conductor penetrating the flexible board 10.

Winding start positions (starting ends) of the first coil 31W, the third coil 33W, and the fifth coil 35W from the starting end 20WS of the W phase coil 20W are arranged on the first face 10F, and winding end positions (terminal ends) thereof are arranged on the second face 10B. The coils 31W, 33W, 35W are wound counterclockwise when the flexible board 10 is seen from the first face 10F side.

Meanwhile, winding start positions (starting ends) of the second coil 32W, the fourth coil 34W, and the sixth coil 36W from the starting end 20WS of the W phase coil 20W are arranged on the second face 10B, and winding end positions (terminal ends) thereof are arranged on the first face 10F. The coils 32W, 34W, 36W are wound clockwise when the flexible board 10 is seen from the first face 10F side.

As shown in fig. 2, 3C and 1, a portion of the wiring (second wiring) of the coil 31W overlaps a portion of the wiring (first wiring) of the adjacent coil 32W through the flexible board 10. In the same way, a portion of the wiring (second wiring) of the coil 32W overlaps a portion of the wiring (first wiring) of the adjacent coil 33W. A portion of the wiring (second wiring) of the coil 33W overlaps a portion of the wiring (first wiring) of the adjacent coil 34W. A portion of the wiring (second wiring) of the coil 34W overlaps a portion of the wiring (first wiring) of the adjacent coil 35W. A portion of the wiring (second wiring) of the coil 35W overlaps a portion of the wiring (first wiring) of the adjacent coil 36W.

As shown in fig. 3C and 1, the inter-coil connecting wire 50W connecting the coil 31W and the coil 32W, the inter-coil connecting wire 50W connecting the coil 33W and the coil 34W, and the inter-coil connecting wire 50W connecting the coil 35W and the coil 36W are arranged on the second face 10B. Meanwhile, the inter-coil connecting wire 50W connecting the coil 32W and the coil 33W, and the inter-coil connecting wire 50W connecting the coil 34W and the coil 35W are arranged on the first face 10F. The W phase terminal 40W and the return wire 70W are arranged on the first face 10F.

As shown in fig. 3C, 5 and 1, the return wire 70W forms a connection between the terminal end 20WE of the W phase coil 20W and the U phase terminal 40U. The return wire 70W extends from the second region R2 across the first region R1.

The first face 10F, the wiring of the coils 20U, 20V, 20W formed on the first face 10F, the inter-coil connecting wires 50U, 50V, 50W, the inter-phase connecting wires 60U, 60V, and the return wire 70W are covered over by a resin insulating layer, although this is not shown in the drawings. The second face 10B, the wiring of the coils 20U, 20V, 20W formed on the second face 10B, and the inter-coil connecting wires 50U, 50V, 50W are likewise covered over by a resin insulating layer.

As shown in fig. 1 and 3A-3C, the wiring of the coils 20U, 20V, 20W is arranged in a hexagonal shape in this embodiment. In other examples, the wiring of the coils 20U, 20V, 20W may be arranged in any shape, such as: circular (perfectly circular or elliptical), or polygonal shapes including triangular, quadrilateral (square, rectangular, rhomboid), pentagonal, heptagonal, or a polygonal shape having more sides. Furthermore, the shapes in which the wiring of the coils is arranged are not limited to all being the same, and the shapes in which the wiring is arranged may differ among coils. The number of windings in the wiring of one coil should be once or more, and is preferably between three and seven times. The coil wiring is formed by arranging a half-turn on the first face, arranging a half-turn on the second face, and connecting the half-turns by means of a through-hole. Furthermore, a half-turn may be arranged on the second face and then a half-turn may be arranged on the first face. Here, a "half-turn" means half of the coil wiring. Furthermore, a 1/4-turn may be arranged on the first face, a 1/4-turn may be arranged on the second face, and the 1/4-turns may be connected by means of a through-hole so that a half-turn is provided in total on the first face or the second face. In addition, the coil wiring may be arranged on the first face or the second face. Here, the coil wiring on the first face and the coil wiring on the second face may be overlapping, partially overlapping, or not overlapping.

The coil board 2 according to this embodiment is produced by any method. For example, the coil board 2 may be formed by means of a tenting process, using a flexible board having conductor layers (metal foils) as a starting material. In another example, the coil board 2 may be obtained by forming metal layers on the flexible board by printing or dispensing. In a further example, the coil board 2 may be obtained by forming a flexible material and metal layers using a 3D printer.

Fig. 6 is an oblique view schematically showing a motor coil board 550 employing the coil board 2 (fig. 1-5) of the embodiment. As shown in fig. 6, the motor coil board 550 for a motor is formed by winding the coil board 2 (fig. 1-5) of the embodiment into a cylindrical shape. When wound into a cylindrical shape, the coil board 2 is wound multiple times about an axis extending in the orthogonal direction (an axis extending parallel to the first edge E1 (fig. 1)), starting from the first edge E1. Furthermore, the number of times that the coil board is wound is not particularly limited. The first face 10F of the flexible board 10 is arranged on the inner circumferential side, and the second face 10B is arranged on the outer circumferential side when the coil board 2 is wound into a cylindrical shape.

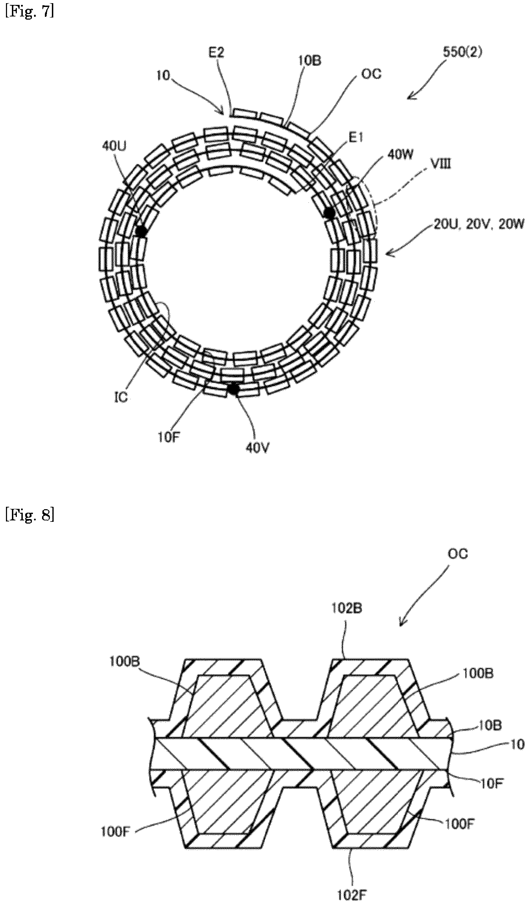

Fig. 7 schematically shows positions of the terminals when the motor coil board 550 is seen along an axial direction. As shown in fig. 7, the U phase terminal 40U, the V phase terminal 40V, and the W phase terminal 40W are arranged at intervals of approximately 120° in a circumferential direction. The U phase terminal 40U and the W phase terminal 40W are arranged on an inner circumferential surface. The V phase terminal 40V is arranged on an outer circumferential surface. In fig. 7, the conductor layers and the conductor layer on the outside thereof in the wound state are shown as overlapping, but the conductor layers and the conductor layer on the outside thereof may be partially overlapping, or the conductor layers and the conductor layer on the outside thereof may not be overlapping.

Fig. 8 is an enlargement of the part VIII in fig. 7, and shows an example of the form of the terminals. As shown in fig. 8, conductor layers 100F, 100B of the coils 20U, 20V, 20W are formed on both faces of the flexible board 10, and insulating films 102F, 102B are formed over the conductor layers 100F, 100B of the coils 20U, 20V, 20W. The conductor layers 100F, 100B are not exposed as a result of the insulating films 102F, 102B being formed, and insulation is maintained because there is no contact between adjacent conductor layers 100F, 100B, or between adjacent conductor layers 100F, 100B in a cross section when the coil board 2 is wound. The insulating films 102F, 102B may be formed by printing a liquid resin. Polyimide is an example of the resin. In fig. 8, the insulating films 102F, 102B are formed so as to follow the shape of the conductor layers 100F, 100B, but the insulating films 102F, 102B may equally be in a form covering upper surfaces of the conductor layers 100F, 100B, or in a form filling areas between the conductor layers 100F, 100B. There is no particular limitation as to the thickness of the insulating layers 102F, 102B, but they should be formed at around 1 µm-30 µm. In fig. 8, the conductor layers 100F, 100B are formed symmetrically while sandwiching the flexible board 10, but the conductor layers 100F, 100B may equally be formed so as to partially overlap while sandwiching the flexible board 10, or the conductor layers 100F, 100B may be formed not overlapping while sandwiching the flexible board 10. Furthermore, in fig. 8, the conductor layers 100F, 100B have a trapezoidal cross-sectional shape, but the conductor layers 100F, 100B may equally have a quadrilateral cross-sectional shape which is square or rectangular. The conductor layers 100F, 100B may have similar cross-sectional shapes, or the conductor layers 100F, 100B may each have different cross-sectional shapes.

Here, the cross section of the motor coil board 550 is formed by the flexible board 10, the conductor layers constituting the wiring of each phase, and the insulating layers covering the conductor layers. Here, the result of calculating the cross-sectional area of all conductor layers in the cross-sectional area of the motor coil board 50 is the coil space factor. Here, the coil space factor in a cross section of the motor coil board 550 is 50%-99%. A high coil conductor space factor is ensured. It is therefore possible to achieve high torque when a motor is formed by using the motor coil board 550 of the embodiment. A high-performance motor can be obtained. Here, the method of calculating the coil space factor is as follows: space factor = (sum of cross-sectional areas of conductor portions/coil cross-sectional area) ×100.

Fig. 7 shows an outer circumferential surface OC and an inner circumferential surface IC of the motor coil board 550. In this embodiment, the cylindricity of the outer circumferential surface OC of the motor coil board 550 is greater than 0.0 mm and no greater than 0.3 mm. When the cylindricity of the outer circumferential surface OC is greater than 0.0 mm and no greater than 0.3 mm, the motor coil board 550 does not roll evenly on a flat area. Since the cylindricity of the outer circumferential surface OC is greater than 0.0 mm and no greater than 0.3 mm, bonding strength with the yoke is increased when a motor is formed. A motor having stable performance can be obtained. Furthermore, the cylindricity of the outer circumferential surface OC of the motor coil board 550 is preferably greater than 0.0 mm and no greater than 0.2 mm. Since the cylindricity of the outer circumferential surface OC is greater than 0.0 mm and no greater than 0.2 mm, bonding strength with the yoke is increased and stability can be achieved when a motor is formed. Consequently, there is no misalignment of the motor coil board 550 even when operated as a motor, and a motor having stable performance can be obtained.

The cylindricity of the outer circumferential surface OC is measured by a measurement method employing a V block. That is to say, the motor coil board 550 is placed on the V block and differences in a direction perpendicular to the axis are measured at five different locations through one rotation, and the average value thereof is calculated to thereby measure the cylindricity of the outer circumferential surface OC.

The combined coil space factor of the coils 20U, 20V, 20W in a cross section of the motor coil board 550 is 50%-99%. A motor having high torque can be obtained by using a motor coil board 550 having a space factor of 50%-99%. In addition, torque can be improved and a high-performance motor can be obtained when the motor coil board 550 of the embodiment is applied to a small motor. It should be noted that a "small motor" as referred to in the present specification means a motor having an outer diameter of 50 mm or less.

Furthermore, the coil space factor in a cross section of the motor coil board 550 is preferably 55%-90%. A motor having high torque can be obtained by using a motor coil board 550 having a coil space factor of 55%-90%. In addition, torque can be improved and a high-performance motor can be obtained when the motor coil board 550 of the embodiment is applied to a small motor.

In addition, the coil space factor in a cross section of the motor coil board 550 is more preferably 60%-80%. A high coil conductor space factor is ensured, and a predetermined cylindrical shape is formed when the coil board is wound into a cylindrical shape. In addition, a high coil conductor space factor is also ensured in a small motor, a predetermined cylindrical shape is formed when the coil board is wound into a cylindrical shape, torque can be improved, and a high-performance motor can be obtained.

The ratio of wiring (i.e., the wiring of the coils 20U, 20V, 20W) occupying the total weight of the motor coil board 550 is 80.0%-99.9%. A motor having high torque can be obtained by using a motor coil board 550 in which the ratio of wiring occupying the total weight is 80.0%-99.9%. Here, the method of calculating the ratio of wiring occupying the total weight of the motor coil board 550 is as follows: wiring ratio = (total weight of conductor portions/weight of coil board) ×100.

Furthermore, the ratio of wiring occupying the total weight of the motor coil board 550 is preferably 85.0%-96.0%. Since the wiring ratio is 85.0%-96.0%, a high coil conductor space factor is ensured, and a predetermined cylindrical shape is formed when the coil board is wound into a cylindrical shape. In addition, a high coil conductor space factor is also ensured in a small motor, a predetermined cylindrical shape is formed when the coil board is wound into a cylindrical shape, torque can be improved, and a high-performance motor can be obtained.

The outer circumferential surface OC of the motor coil board 550 is formed by the flexible board 10, and the wiring of the coils 20U, 20V, 20W is not exposed. That is to say, the insulating layer covering the wiring is formed on the outermost circumference of the motor coil board 550. The outer circumferential surface OC of the motor coil board 550 is insulated from the outside.

The coil board 2 may be wound any number of times when the motor coil board 550 is formed. The coil board 2 is preferably wound between twice and 10 times. By winding the coil board between twice and 10 times, the cylindricity of the outer circumferential surface OC of the motor coil board 550 which is formed is greater than 0.0 mm and no greater than 0.3 mm, as stated above. A reduction in motor performance can be suppressed as a result.

The coil space factor in a cross section of the motor coil board 550 is 50%-99% and the cylindricity of the outer circumferential surface OC of the motor coil board 550 is greater than 0.0 mm and no greater than 0.3 mm. When a motor is formed by using the motor coil board 550 according to an embodiment of the present invention, wherein the coil space factor is 50%-99% and the cylindricity of the outer circumferential surface OC is greater than 0.0 mm and no greater than 0.3 mm, bonding strength with the yoke is increased when the motor is formed, and high torque can be achieved. A high-performance motor can be obtained. In addition, torque can be improved and a high-performance motor can be obtained when the motor coil board 550 of the embodiment is applied to a small motor.

The coil space factor in a cross section of the motor coil board 550 is preferably 55-90% and the cylindricity of the outer circumferential surface OC of the motor coil board 550 is preferably greater than 0.0 mm and no greater than 0.3 mm. A motor having high torque can be obtained by using a motor coil board 550 having a coil space factor of 55%-90% and cylindricity of the outer circumferential surface OC of greater than 0.0 mm and no greater than 0.3 mm. A high-performance motor can be obtained. In addition, torque can be improved and a high-performance motor can be obtained when the motor coil board 550 of the embodiment is applied to a small motor.

In addition, the coil space factor in a cross section of the motor coil board 550 is preferably 60%-80% and the cylindricity of the outer circumferential surface OC of the motor coil board 550 is preferably greater than 0.0 mm and no greater than 0.3 mm. The coil space factor in a cross section of the motor coil board 550 is 60%-80% and the cylindricity of the outer circumferential surface OC of the motor coil board 550 is greater than 0.0 mm and no greater than 0.3 mm, so a high coil conductor space factor is ensured, and a predetermined cylindrical shape is formed when the coil board is wound into a cylindrical shape. Bonding strength with the yoke is increased when a motor is formed, and high torque can be achieved. A high-performance motor can be obtained. In addition, a high coil conductor space factor is also ensured in a small motor, a predetermined cylindrical shape is formed when the coil board is wound into a cylindrical shape, bonding strength with the yoke is increased when a motor is formed, torque can be improved, and a high-performance motor can be obtained. In addition, torque can be improved and a high-performance motor can be obtained when the motor coil board 550 of the embodiment is applied to a small motor.

The coil space factor in a cross section of the motor coil board 550 is preferably 60-80% and the cylindricity of the outer circumferential surface OC of the motor coil board 550 is preferably greater than 0.0 mm and no greater than 0.2 mm. The coil space factor in a cross section of the motor coil board 550 is 60%-80% and the cylindricity of the outer circumferential surface OC of the motor coil board 550 is greater than 0.0 mm and no greater than 0.2 mm, so a high coil conductor space factor is ensured, and a predetermined cylindrical shape is formed when the coil board is wound into a cylindrical shape. Bonding strength with the yoke is increased when a motor is formed, and high torque can be achieved. A high-performance motor can be obtained. In addition, a high coil conductor space factor is also ensured in a small motor, a predetermined cylindrical shape is formed when the coil board is wound into a cylindrical shape, bonding strength with the yoke is increased when a motor is formed, and stability is achieved. Consequently, there is no misalignment of the motor coil board 550 even when operated as a motor, torque can be improved, and a high-performance motor can be obtained. In addition, torque can be improved and a high-performance motor can be obtained when the motor coil board 550 of the embodiment is applied to a small motor.

The ratio of wiring occupying the total weight of the motor coil board 550 is 80.0%-99.9% and the cylindricity of the outer circumferential surface OC of the motor coil board 550 is greater than 0.0 mm and no greater than 0.3 mm. When a motor is formed by using a motor coil board 550 in which the ratio of wiring occupying the total weight of the motor coil board 550 of the embodiment is 80.0%-99.9% and the cylindricity of the outer circumferential surface OC is greater than 0.0 mm and no greater than 0.3 mm, the coil space factor is increased, and high torque can be achieved. A high-performance motor can be obtained. In addition, torque can be improved and a high-performance motor can be obtained when the motor coil board 550 of the embodiment is applied to a small motor.

Furthermore, the ratio of wiring occupying the total weight of the motor coil board 550 is 85.0%-96.0% and the cylindricity of the outer circumferential surface OC of the motor coil board 550 is greater than 0.0 mm and no greater than 0.3 mm. When a motor is formed by using a motor coil board 550 in which the ratio of wiring occupying the total weight of the motor coil board 550 of the embodiment is 85.0%-96.0% and the cylindricity of the outer circumferential surface OC is greater than 0.0 mm and no greater than 0.3 mm, a predetermined cylindrical shape is formed while the ratio of wiring is also increased. As a result, bonding strength with the yoke is increased when a motor is formed, the coil space factor is increased, and high torque can be achieved. A high-performance motor can be obtained. In addition, torque can be improved and a high-performance motor can be obtained when the motor coil board 550 of the embodiment is applied to a small motor.

In addition, the ratio of wiring occupying the total weight of the motor coil board 550 is 85.0%-96.0% and the cylindricity of the outer circumferential surface OC of the motor coil board 550 is greater than 0.0 mm and no greater than 0.2 mm. When a motor is formed by using a motor coil board 550 in which the ratio of wiring occupying the total weight of the motor coil board 550 of the embodiment is 85.0%-96.0% and the cylindricity of the outer circumferential surface OC is greater than 0.0 mm and no greater than 0.2 mm, a predetermined cylindrical shape is formed and high torque can be achieved while the ratio of wiring is increased and the coil space factor is also increased. As a result, bonding strength with the yoke is increased and stability is achieved when a motor is formed. Consequently, there is no misalignment of the motor coil board 550 even when operated as a motor, and a motor having stable performance can be obtained. In addition, torque can be improved and a high-performance motor can be obtained when the motor coil board 550 of the embodiment is applied to a small motor.

The coil space factor in a cross section of the motor coil board 550 is 50%-99% and the ratio of wiring occupying the total weight of the motor coil board 550 is 80.0%-99.9%. The coil space factor is increased and high torque can be achieved by using the motor coil board 550 of the embodiment, wherein the coil space factor is 50%-99% and the ratio of wiring occupying the total weight of the motor coil board 550 is 80.0%-99.9%. A high-performance motor can be obtained. In addition, torque can be improved and a high-performance motor can be obtained when the motor coil board 550 of the embodiment is applied to a small motor.

The coil space factor in a cross section of the motor coil board 550 is preferably 55%-90% and the ratio of wiring occupying the total weight of the motor coil board 550 is preferably 85.0%-96.0%. The coil space factor is increased and a motor having high torque can be obtained by using a motor coil board 550 having a coil space factor of 55%-90% and a ratio of wiring occupying the total weight of the motor coil board 550 of 85.0%-96.0%. A high-performance motor can be obtained. In addition, torque can be improved and a high-performance motor can be obtained when the motor coil board 550 of the embodiment is applied to a small motor.

In addition, the coil space factor in a cross section of the motor coil board 550 is preferably 60%-80% and the ratio of wiring occupying the total weight of the motor coil board 550 is preferably 85.0%-96.0%. The coil space factor is 60%-80% and the ratio of wiring occupying the total weight of the motor coil board 550 is 85.0%-96.0%, so a high coil conductor space factor is ensured, and a predetermined cylindrical shape is formed when the coil board is wound into a cylindrical shape. High torque can be achieved. A high-performance motor can be obtained. In addition, a high coil conductor space factor is also ensured in a small motor, a predetermined cylindrical shape is formed when the coil board is wound into a cylindrical shape, torque can be improved, and a high-performance motor can be obtained. In addition, torque can be improved and a high-performance motor can be obtained when the motor coil board 550 of the embodiment is applied to a small motor.

The coil space factor in a cross section of the motor coil board 550 is 50%-99%, the ratio of wiring occupying the total weight of the motor coil board 550 is 80.0%-99.9%, and the cylindricity of the outer circumferential surface OC of the motor coil board 550 is greater than 0.0 mm and no greater than 0.3 mm. When a motor is formed by using the motor coil board 550 of the embodiment, wherein the coil space factor is 50%-99%, the ratio of wiring occupying the total weight of the motor coil board 550 is 80.0%-99.9%, and the cylindricity of the outer circumferential surface OC of the motor coil board 550 is greater than 0.0 mm and no greater than 0.3 mm, the coil space factor is increased, and high torque can be achieved. Bonding strength with the yoke is increased when a motor is formed, and high torque can be achieved. A high-performance motor can be obtained. In addition, torque can be improved and a high-performance motor can be obtained when the motor coil board 550 of the embodiment is applied to a small motor.

Furthermore, the coil space factor in a cross section of the motor coil board 550 is preferably 55%-90%, the ratio of wiring occupying the total weight of the motor coil board 550 is preferably 85.0%-96.0%, and the cylindricity of the outer circumferential surface OC of the motor coil board 550 is preferably greater than 0.0 mm and no greater than 0.3 mm. By using a motor coil board 550 having a coil space factor of 55%-90%, a ratio of wiring occupying the total weight of the motor coil board 550 of 85.0%-96.0%, and a cylindricity of the outer circumferential surface OC of the motor coil board 550 of greater than 0.0 mm and no greater than 0.3 mm, the coil space factor is increased, a predetermined cylindrical shape is formed, and high torque can be achieved. Consequently, even when the motor coil board is operated as a motor, a motor having stable performance can be obtained. In addition, torque can be improved and a high-performance motor can be obtained when the motor coil board 550 of the embodiment is applied to a small motor.

Moreover, the coil space factor in a cross section of the motor coil board 550 is preferably 60%-80%, the ratio of wiring occupying the total weight of the motor coil board 550 is preferably 85.0%-96.0%, and the cylindricity of the outer circumferential surface OC of the motor coil board 550 is preferably greater than 0.0 mm and no greater than 0.3 mm. The coil space factor is 60%-80%, the ratio of wiring occupying the total weight of the motor coil board 550 is 85.0%-96.0%, and the cylindricity of the outer circumferential surface OC of the motor coil board 550 is greater than 0.0 mm and no greater than 0.3 mm, so a high coil conductor space factor is ensured, and a predetermined cylindrical shape is formed when the coil board is wound into a cylindrical shape. High torque can be achieved. As a result, bonding strength with the yoke is increased when a motor is formed. Consequently, even when the motor coil board is operated as a motor, a motor having stable performance can be obtained. Torque can be improved and a high-performance motor can be obtained when the motor coil board 550 of the embodiment is applied to a small motor.

Moreover, the coil space factor in a cross section of the motor coil board 550 is preferably 60%-80%, the ratio of wiring occupying the total weight of the motor coil board 550 is preferably 85.0%-96.0%, and the cylindricity of the outer circumferential surface OC of the motor coil board 550 is preferably greater than 0.0 mm and no greater than 0.2 mm. The coil space factor is 60%-80%, the ratio of wiring occupying the total weight of the motor coil board 550 is 85.0%-96.0%, and the cylindricity of the outer circumferential surface OC of the motor coil board 550 is greater than 0.0 mm and no greater than 0.2 mm, so a high coil conductor space factor is ensured, and a predetermined cylindrical shape is formed when the coil board is wound into a cylindrical shape. High torque can be achieved. As a result, bonding strength with the yoke is increased and stability is achieved when a motor is formed. Consequently, there is no misalignment of the motor coil board 550 even when operated as a motor, and a motor having stable performance can be obtained. Torque can be improved and a high-performance motor can be obtained when the motor coil board 550 of the embodiment is applied to a small motor.

The motor coil board 550 of the embodiment is used in a slotless motor. In another example, the motor coil board 550 may be used in a motor other than a slotless motor.

The diameter (cross-sectional outer diameter) of the outer circumferential surface OC of the motor coil board 550 is 50 mm or less. The diameter (cross-sectional outer diameter) of the outer circumferential surface OC of the motor coil board 550 is preferably 30 mm or less. By forming a small motor using a motor coil board 550 having a diameter of 50 mm or less, it is possible to efficiently suppress a reduction in motor performance. The diameter of the outer circumferential surface OC of the motor coil board 550 is the length measured by calipers. It should be noted that in the embodiment shown in fig. 1, the coil space factor in a cross section of the motor coil board 550 is 70%. The ratio of wiring occupying the total weight of the motor coil board 550 is 93%. The cylindricity of the outer circumferential surface OC is 0.1 mm.

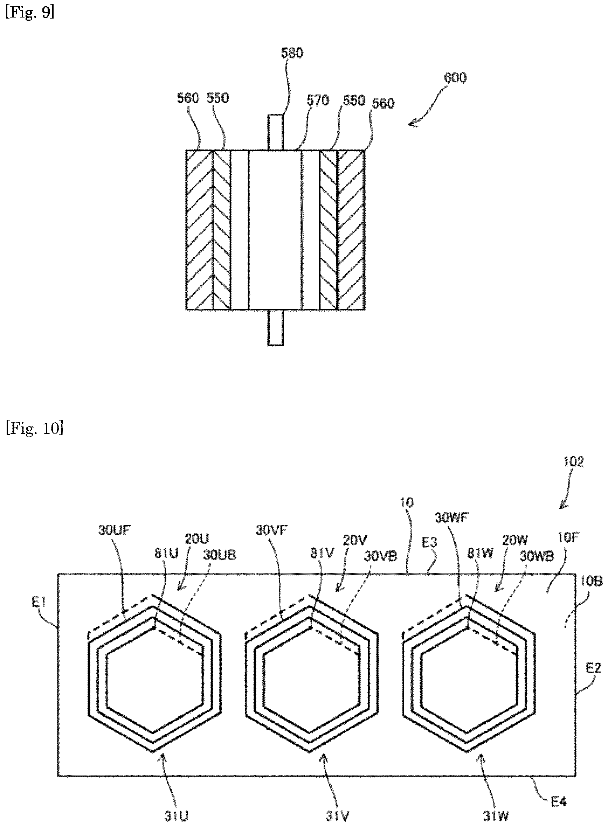

Fig. 9 is a view in cross section schematically showing a motor 600 employing the motor coil board 550 (fig. 6-8) of the embodiment. The motor 600 is formed by arranging the motor coil board 550 on the inside of a yoke 560, and arranging a rotary shaft 580 and a magnet 570, which is fixed to the rotary shaft 580, on the inside of the motor coil board 550. The motor 600 of the embodiment is a slotless motor.

The configurations of the coil board 2 (fig. 1-5), the motor coil board 550 (fig. 6-8), and the motor 600 (fig. 9) of the embodiment are as described above. The cylindricity of the outer circumferential surface OC of the motor coil board 550 of the embodiment is greater than 0.0 mm and no greater than 0.3 mm, as described above. When the motor 600 is formed by using the motor coil board 550, the bonding strength between the yoke 560 and the outer circumferential surface OC of the motor coil board 550 is therefore higher than when the cylindricity of the outer circumferential surface is 0.0 mm. The motor coil board 550 is unlikely to detach from the yoke 560 even when a counteraction is exerted by rotation of the rotary shaft 580 and the magnet 570. When a small motor 600 employing the motor coil board 550 of the embodiment is produced in particular, the bonding strength is higher because a wider contact area is maintained between the yoke 560 and the outer circumferential surface OC of the motor coil board 550. Stable motor performance is therefore achieved when the motor 600 is formed by using the motor coil board 550 of the embodiment.

### [Modified example of the embodiment]

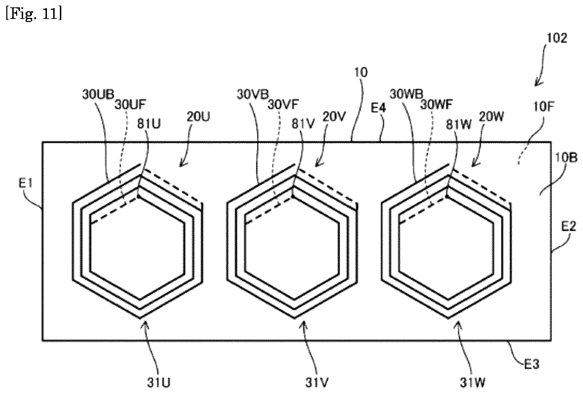

Fig. 10 and 11 show a modified example of the embodiment. Fig. 10 is a plan view showing a coil board 102 according to the modified example. Fig. 11 is a bottom view showing the coil board 102 according to the modified example. As shown in fig. 10 and 11, the modified example differs from the embodiment in regard to the arrangement of the wiring of the coils 31U, 31V, 31W constituting the U phase coil 20U, the V phase coil 20V, and the W phase coil 20W.

It should be noted that, in fig. 10 and 11, only the coils 31U, 31V, 31W are depicted as the coils constituting the U phase coil 20U, the V phase coil 20V, and the W phase coil 20W, but in actual fact, the U phase coil 20U, the V phase coil 20V, and the W phase coil 20W may equally be formed by a plurality of coils that include the coils 31U, 31V, 31W. Furthermore, the U phase terminal 40U, the V phase terminal 40V, the W phase terminal 40W, the inter-coil connecting wires 50U, 50V, 50W, the plurality of inter-phase connecting wires 60U, 60V, and the return wire 70W are not depicted in fig. 10 and 11.

The coil 31U constituting the U phase coil 20U comprises coil-shaped first wiring 30UF (fig. 10) provided on the first face 10F, and coil-shaped second wiring 30UB (fig. 11) provided on the second face 10B. The first wiring 30UF and the second wiring 30UB are electrically connected through a via conductor 81U penetrating the flexible board 10. The coil 20V constituting the V phase likewise comprises first wiring 30VF and second wiring 30VB. The first wiring 30VF and the second wiring 30VB are electrically connected through a via conductor 81V. The coil 20W constituting the W phase comprises first wiring 30WF and second wiring 30WB. The first wiring 30WF and the second wiring 30WB are electrically connected through a via conductor 81W.

As shown in fig. 10, the first wiring 30UF is formed in a spiral shape (hexagonal spiral shape) winding clockwise from the outer circumference toward the inner circumference. The via conductor 81U is formed at an inner circumferential end of the first wiring 30UF. As shown in fig. 11, the second wiring 30UB is formed in a spiral shape (hexagonal spiral shape) winding counterclockwise from the outer circumference toward the inner circumference. The via conductor 81U is formed at an inner circumferential end of the second wiring 30UB. The first wiring 30UF and the second wiring 30UB are formed in a spiral shape with the same winding direction as seen from the same face. The first wiring 30UF and the second wiring 30UB overlap through the flexible board 10. The first wiring 30UF and the second wiring 30UB function as a single coil 31U in which they are electrically connected in series.

The first wiring 30VF and second wiring 30VB, and the first wiring 30WF and second wiring 30WB have the same relationship as the first wiring 30UF and the second wiring 30UB. The first wiring 30VF and the second wiring 30VB are formed in a spiral shape with the same winding direction as seen from the same face. The first wiring 30VF and the second wiring 30VB overlap through the flexible board 10. The first wiring 30VF and the second wiring 30VB function as a single coil 31V in which they are electrically connected in series. The first wiring 30WF and the second wiring 30WB are formed in a spiral shape with the same winding direction as seen from the same face. The first wiring 30WF and the second wiring 30WB overlap through the flexible board 10. The first wiring 30WF and the second wiring 30WB function as a single coil 31W in which they are electrically connected in series.

The first face 10F and the first wiring 30UF, 30VF, 30WF are covered over by a resin insulating layer, although this is not shown in the drawings. The second face 10B and the second wiring 30UB, 30VB, 30WB are likewise covered over by a resin insulating layer. A "small motor" as referred to in the present specification means a motor having an outer diameter of 50 mm or less.

As shown in fig. 10 and 11, the wiring of the coils 20U, 20V, 20W is arranged in a hexagonal shape in the modified example. In other examples, the wiring of the coils 20U, 20V, 20W may be arranged in any shape, such as: circular (perfectly circular or elliptical), or polygonal shapes including triangular, quadrilateral (square, rectangular, rhomboid), pentagonal, heptagonal, or a polygonal shape having more sides. Furthermore, the shapes in which the wiring of the coils is arranged are not limited to all being the same, and the shapes in which the wiring is arranged may differ among coils.

The coil board 102 according to the modified example is produced by any method. For example, the coil board 2 may be formed by means of a tenting process, using a flexible board having conductor layers (metal foils) as a starting material. In another example, the coil board 102 may be obtained by forming metal layers on the flexible board by printing or dispensing. In a further example, the coil board 102 may be obtained by forming a flexible material and metal layers using a 3D printer.

The motor coil board 550 for a motor is formed by winding the coil board 102 of the modified example into a cylindrical shape (see fig. 6-8). The motor coil board 550 formed by means of the coil board 102 of the modified example also has the same features as the motor coil board 550 of the embodiment. Accordingly, the motor coil board 550 of the modified example is also capable of demonstrating the same action and effects as the motor coil board 550 of the embodiment. It should be noted that the coil space factor in the cross-sectional area of the motor coil board 550 is 65% in the modified example shown in fig. 10 and 11. The ratio of wiring occupying the total weight of the motor coil board 550 is 91%. The cylindricity of the outer circumferential surface OC (see fig. 7) is 0.1 mm.

### Key to Symbols

2, 102: Coil board
10: Flexible board
20U: U phase coil
20V: V phase coil
20W: W phase coil
550: Motor coil board
560: Yoke
570: Magnet
580: Rotary shaft
600: Motor
IC: Inner circumferential surface
OC: Outer circumferential surface

## Claims

1. A motor coil board comprising: a flexible board having a first face and a second face on the opposite side to the first face; and
a plurality of coils formed by wiring provided on the first face and the second face,
the motor coil board being formed into a cylindrical shape by being wound in a circumferential direction about an axis extending in an orthogonal direction orthogonal to a longitudinal direction of the flexible board, starting from a first end of the flexible board in the longitudinal direction, wherein
cylindricity of an outer circumferential surface is greater than 0.0 mm and no greater than 0.3 mm.

2. The motor coil board of claim 1, wherein the cylindricity is greater than 0.0 mm and no greater than 0.2 mm.

3. The motor coil board of claim 1, wherein the outer circumferential surface is formed by the flexible board, and the wiring is not exposed.

4. The motor coil board of claim 1, wherein the coils comprise: half-turns of first wiring formed on the first face; half-turns of second wiring formed on the second face; and via conductors connecting the first wiring and the second wiring.

5. The motor coil board of claim 1, wherein the coils comprise: first wiring formed in a spiral shape on the first face; second wiring formed in a spiral shape on the second face; and via conductors connecting the first wiring and the second wiring.

6. The motor coil board of claim 1, which is used in a slotless motor.

7. The motor coil board of claim 1, having a cross-sectional outer diameter of 50 mm or less.

8. A motor which is formed by arranging the motor coil board of claim 1 on the inside of a cylindrical yoke, and arranging a rotary shaft and a magnet on the inside of the motor coil.
